## Europäisches Patentamt

## European Patent Office

## Office européen des brevets

(11) Veröffentlichungsnummer: **0 074 528**
A1

(12) # EUROPÄISCHE PATENTANMELDUNG

(21) Anmeldenummer: **82107749.2**

(22) Anmeldetag: **24.08.82**

(51) Int. Cl.³: **C 09 J 7/04**
**C 09 J 3/14**

(30) Priorität: **04.09.81 DE 3134998**

(43) Veröffentlichungstag der Anmeldung:
**23.03.83 Patentblatt 83/12**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Vollmann, Hansjörg, Dr., Dipl.-Chem.**
**Am Dachsbau 11**
**D-6232 Bad Soden Neuenhain(DE)**

(72) Erfinder: **Seibel, Markus, Dr., Dipl.-Chem.**
**Donnersbergstrasse 6**
**D-6500 Mainz 42(DE)**

(54) **Heisssiegelfähiges Papier und Verfahren zu seiner Herstellung.**

(57) Es wird ein heißsiegelfähiges Papier, insbesondere ein Lichtpauspapier, mit einer Heißsiegelschicht aus einem in der Hitze aktivierbaren Klebstoff, bei dem die Heißsiegelschicht zusätzlich in dem Klebstoff eine feinverteilte, pulverförmige Mischung enthält, die aus einem Copolymerisat des Ethylens mit Vinylacetat, niedermolekularem Polyethylen und Kohlenwasserstoffharz besteht und ein Verfahren zur Herstellung des heißsiegelfähigen Papiers beschrieben.

EP 0 074 528 A1

HOECHST AKTIENGESELLSCHAFT
KALLE Niederlassung der Hoechst AG

Hoe 81/K 050      - 1 -      22. August 1982
WLK-Dr.S-ur

Heißsiegelfähiges Papier und Verfahren zu seiner Herstellung

Die Erfindung betrifft ein heißsiegelfähiges Papier, insbesondere Lichtpauspapier, mit einer Heißsiegelschicht aus einem in der Hitze aktivierbaren Klebstoff und Verfahren zu seiner Herstellung.

Heißsiegelfähiges Papier, insbesondere heißsiegelfähiges Lichtpauspapier, wird in der textilverarbeitenden Industrie zur rationellen Fertigung der Zuschnitte eingesetzt. Hierzu werden die Schnittmuster zunächst auf die lichtempfindliche Seite des Papiers aufgepaust. Die Schnittbildpausen werden dann mit der Heißsiegelschicht auf die oberste Stofflage des zuzuschneidenden Warenstapels aufgebügelt. Die Stoffbahnen können so in rationeller Weise mit mechanischem Band- und/oder Stoßmesser zugeschnitten werden. Nach dem Herstellen der Zuschnitte wird das Papier von der oberen Stofflage wieder abgezogen.

Ein besonderes Merkmal des Verfahrens ist es, daß die Haftung des Papiers auf der Stoffbahn zwar der Beanspruchung beim Zuschneiden standhalten, sich aber beim Abziehen das Papier von der Stoffbahn wieder rückstandsfrei lösen muß. Bei der Vielzahl verschiedener Stoffe und Ausrüstungen ist ein brauchbarer Kompromiß nur schwer zu erzielen.

HOECHST AKTIENGESELLSCHAFT
KALLE Niederlassung der Hoechst AG

- 2 -

Zur Herstellung der Heißsiegelschicht aus Hitze aktivierbarem Klebstoff können verschiedene Polymere oder Copolymere eingesetzt werden. Ein Papier mit einer solchen
Schicht hat zwar im allgemeinen eine gute Siegelfähigkeit, zeigt jedoch beim Lagern auf der Rolle so starke
Klebeneigung, was als Blockingeffekt oder auch Kaltverklebung bekannt ist, daß es nicht mehr möglich ist, das
Papier unbeschädigt zur Verwendung von der Rolle abzuwickeln.

Eine Methode, diesem Nachteil zu begegnen, besteht darin,
eine harte Polymerdisperion zuzumischen, mit der die vorzeitige Verklebung auf der Rolle verhindert wird, zum
Beispiel durch Zugabe von reiner Polyvinylacetat-Dispersion. Eine andere Methode, diesem Nachteil zu begegnen,
ist das Aufstreuen von organischen oder anorganischen
Pudern, wie zum Beispiel von Stärke oder Carbonaten, auf
die Heißsiegelschicht. Gelegentlich werden auch die erste
und zweite Methode kombiniert. Beiden Methoden haftet
jedoch der Nachteil an, daß im gleichen Maße, in dem das
vorzeitige Verkleben des Papiers vermindert wird, die
Siegelfähigkeit der Schicht leidet.

Hinzu kommt, daß die besonders in jüngerer Zeit zunehmend
eingesetzte schmutz- und wasserabweisende Ausrüstung der
Textilien die Erzielung einer ausreichenden Siegelfähigkeit erschwert.

Die beschriebenen Methoden erfordern zur Verbesserung der
Siegelfähigkeit eine höhere Temperatur und/oder höheren
Druck und/oder höhere Siegeldauer. Die notwendige hohe

HOECHST AKTIENGESELLSCHAFT
KALLE Niederlassung der Hoechst AG

- 3 -

Aufbügeltemperatur wird mit den bei den Textilverarbeitern üblichen Bügelplatten mit zum Beispiel 2 kW Heizleistung bei einer Fläche von 75 cm x 15 cm aber nur dann erreicht, wenn die Papierbahn mit maximal eingestellter Heizleistung sehr langsam, d.h. mit erhöhtem Zeitaufwand, auf die Textilbahn aufgebügelt wird. Dabei wird oft auf den ersten Abschnitten die Bahn versengt, während auf den letzten Abschnitten die notwendige Haftkraft gar nicht mehr erreicht wird, weil die Wärmeabfuhr während des Bügelns größer ist als die Wärmezufuhr durch die Heizelemente. Konstante Siegelbedingungen sind dadurch also nicht zu erzielen. Außerdem leiden die Bügelplatten, die aus Aluminium bestehen und sich bereits bei Temperaturen um 200°C und darüber, wie sie zu Beginn des Aufbügelns herrschen, deformieren. Häufige kosten- und zeitaufwendige Reparaturen sind die Folge.

Des weiteren wurde bisher schon versucht, die genannten Nachteile und Schwierigkeiten durch Einsatz einer Siegelschicht aus Copolymerisaten des Ethylens mit Vinylacetat zu beseitigen. Sie bestehen zum überwiegenden Teil aus Ethylen und haben gegenüber den eingangs geschilderten Schichten den Vorteil, daß sie den Kaltverklebungseffekt verhindern, ohne daß die Siegeltemperatur erhöht werden muß. Es zeigte sich, daß eine solche Schicht gegenüber einer üblichen Vinylacetat-Copolymerisat-Schicht um ca. 30°C niedriger gesiegelt werden kann. Dennoch konnten sich entsprechende Siegelschichten bislang nicht durchsetzen, weil hiermit neue Nachteile verbunden sind. So siegelt diese Schicht zum Beispiel auf Stoffen, die stark

HOECHST AKTIENGESELLSCHAFT
KALLE Niederlassung der Hoechst AG

- 4 -

schmutz- und wasserabweisend ausgerüstet sind, nur mit sehr schwacher Haftung. Bei dem Versuch, durch Anwendung höherer Temperatur und/oder Druck und/oder Dauer die Haftung zu verbessern, sinkt diese noch weiter ab. Umgekehrt gibt es Stoffarten (zum Beispiel Acetat-Futter), sie sich mit einer solchen Siegelschicht bereits bei sehr niedriger Temperatur extrem fest verbinden, so daß die Papierbahn nicht mehr von der textilen Oberfläche abzuziehen ist. Diese Siegelschichten zeigen also gegenüber verschiedenen Textilien ein extrem unterschiedliches Siegelverhalten.

Ein anderer schwerwiegender Nachteil der Heißsiegelschichten aus Ethylen/Vinylacetat-Copolymerisaten ist der deutlich fühl- und sichtbare Rückstand, den sie auf der textilen Oberfläche nach dem Abziehen der Papiere hinterlassen. Dies tritt sogar dann auf, wenn die Schichten ungenügende Haftung haben, wie zum Beispiel auf stark ausgerüsteter Popeline.

Es war deshalb Aufgabe der Erfindung, ein heißsiegelfähiges Papier zu schaffen, das die beschriebenen Nachteile vermeidet und das bei üblichen Siegelbedingungen auf den verschiedensten textilen Unterlagen gut haftet, sich rückstandsfrei entfernen läßt und das bei seiner Lagerung keine Kaltverklebung zeigt.

Die Aufgabe wird bei einem heißsiegelfähigen Papier der eingangs genannten Art dadurch gelöst, daß man ein Papier mit einer Heißsiegelschicht vorsieht, die zusätzlich eine

HOECHST AKTIENGESELLSCHAFT
KALLE Niederlassung der Hoechst AG

- 5 -

in dem Klebstoff feinverteilte, pulverförmige Mischung
enthält, die aus einem Copolymerisat des Ethylens mit
Vinylacetat, niedermolekularem Polyethylen und Kohlenwasserstoffharz besteht. Die Mischung stellt ein Pulver
dar, das Teilchengrößen zwischen etwa 20 und 200 $\mu$m besitzt. Die Mischung ist zu etwa 5 bis 30 Gewichtsprozent,
bezogen auf das Gesamttrockenschichtgewicht der Heißsiegelschicht, vorhanden. Die Heißsiegelschicht ist vorzugsweise mit einem Schichtgewicht von etwa 10 bis 25 g/m$^2$
aufgetragen.

Hierdurch wird ein Papier mit einer Heißsiegelschicht
erzielt, das ohne Verminderung der Siegelbarkeit frei von
Kaltverklebung ist. Gegenüber den verschiedensten Textilien resultiert eine gleichmäßige Haftung, und nach dem
Ablösen des Papiers werden keine Rückstände hinterlassen.

Erfindungsgemäß besteht die Heißsiegelschicht aus einem
filmbildenden und siegelbaren, den Anforderungen hinsichtlich der Kaltverklebung jedoch noch nicht genügenden
Klebstoff und der ebenfalls siegelfähigen, aber pulverförmigen Mischung, die unter den Auftrags- und Trocknungsbedingungen keinen Film bildet und sich dabei auch
nicht in dem Klebstoff löst, sondern körnig aus der
Schichtoberfläche herausragt.

Als in der Hitze aktivierbarer Klebstoff sind alle bisher
verwendeten Polymere des Vinylacetats, des Vinylchlorids,
der Acryl- und Methacrylsäureester, deren Copolymere und
deren Mischungen geeignet.

HOECHST AKTIENGESELLSCHAFT
KALLE Niederlassung der Hoechst AG

- 6 -

Die erfindungsgemäße pulverförmige Mischung besteht aus einem Gemisch eines Copolymerisats des Ethylens mit Vinylacetat, das vorzugsweise einen Schmelz-Index von über 50, insbesondere im Bereich von 120 bis etwa 600 g/10 min, besitzt, einem niedermolekularen Polyethylen mit einem Molekulargewicht im Bereich von etwa 2.000 - 10.000 und mit einem Tropfpunkt im Bereich von etwa 110 - 130°C. Ganz besonders hat sich ein verzweigtkettiges Polyethylen bewährt, das keine paraffinischen Bestandteile von kleinem Molekulargewicht, etwa 400, enthält. Die pulverförmige Mischung enthält weiterhin ein die Klebrigkeit vermittelndes Kohlenwasserstoffharz, das vorzugsweise ein Polymerisat aus Dicyclopentadien und aromatischen Kohlenwasserstoffen darstellt.

Die Mischung besteht im allgemeinen aus 40 bis 60 Gewichtsteilen Copolymerisat des Ethylens mit Vinylacetat, 20 bis 40 Gewichtsteilen niedermolekularem Polyethylen und 10 bis 20 Gewichtsteilen Kohlenwasserstoffharz.

Der Mischung können Stabilisatoren, Antistatika oder Gleitmittel, in geringen Mengen, d.h. in Mengen von etwa 0,05 - 1 Gewichtsteilen, beigefügt sein.

Die pulverförmige Mischung wird hergestellt durch Homogenisieren in der Schmelze, Granulieren und Pulverisieren durch einen Kaltmahlprozeß.

Die Teilchengröße der pulverförmigen Mischung beträgt mehr als 20 µm und kann eine Größenverteilung bis über

HOECHST AKTIENGESELLSCHAFT
KALLE Niederlassung der Hoechst AG

- 7 -

200 μm haben; vorzugsweise besitzen die Teilchen eine
Größe zwischen etwa 20 und 100 μm.

Es ist möglich, dem Pulver zur besseren Rieselfähigkeit
hochdisperse Kieselsäure oder zum Beispiel Silizium-
Mischoxide zuzufügen.

Als Copolymerisat des Ethylens mit Vinylacetat kommen
solche in Frage, die aus etwa 75 - 85, vorzugsweise
80 - 83 Gewichtsteilen Ethylen und etwa 15 - 25, vorzugsweise 17 - 20 Gewichtsteilen Vinylacetat bestehen. Der
Erweichungspunkt dieser Copolymerisate liegt im Bereich
von etwa 80 - 130°C, der Schmelzindex vorzugsweise bei
etwa 120 bis etwa 600 g/10 min.

Als Kohlenwasserstoffharz ist ein solches besonders geeignet, das aus DE-OS 27 57 177 bekannt ist, das ein
Polymerisat aus 40 bis 80 Gewichtsteilen Dicyclopentadien
und 20 bis 60 Gewichtsteilen eines aromatischen Kohlenwasserstoffs darstellt und in Gegenwart von Friedel-
Crafts-Katalysatoren hergestellt wird. Das Kohlenwasserstoffharz besitzt ein mittleres Molekulargewicht von 300
bis 5.000 und Schmelztemperaturen von 30 bis 150°C, vorzugsweise 50 bis 80°C.

Die Eigenschaften der erfindungsgemäßen Heißsiegelschicht
können durch Veränderung der Rezeptur, sowohl der filmbildenden und siegelbaren Grundsubstanz als auch der
pulverförmigen Mischung, durch Veränderung des Mengenverhältnisses von Grundsubstanz und Mischung und/oder

HOECHST AKTIENGESELLSCHAFT
KALLE Niederlassung der Hoechst AG

- 8 -

durch Veränderung des Gesamttrockenschichtgewichtes aus
beiden Komponenten modifiziert werden.

Benutzt man im Rezept der pulverförmigen Mischung einen
zu großen Anteil des Copolymerisates aus Ethylen mit
Vinylacetat oder ein Polyethylen, das paraffinartige Anteile enthält, so wird die Neigung zum Rückstand aus der
Heißsiegelschicht nach dem Ablösen des Papiers auf der
textilen Unterlage verstärkt. Im ersten Fall handelt es
sich um weiße harte Rückstände, im zweiten ergeben sich
Rückstände, die wie Fettflecken auf den Stoffbahnen aussehen.

Bei einem zu geringen Anteil an pulverförmiger Mischung
in der Heißsiegelschicht wird vor allem die Kaltverklebung der Papierbahn zu wenig vermindert. Ein Anteil von
mehr als 30 % vom Gesamttrockenschichtgewicht der Heißsiegelschicht dagegen verbessert die Eigenschaften nicht
mehr wesentlich.

Bei der Auswahl des an sich bekannten Klebstoffs kann erfindungsgemäß die Neigung zur Kaltverklebung weitgehend
unberücksichtigt bleiben, weil durch die zusätzlich verwendete pulverförmige Mischung diese Eigenschaft ausgeglichen wird. Es können somit Gemische von erhöhter
Siegelfähigkeit als Klebstoff eingesetzt werden, wodurch
es wiederum möglich ist, mit geringeren Schichtgewichten
auszukommen. Das Gesamttrockenschichtgewicht der Heißsiegelschicht kann dann bei gleich guter Siegelbarkeit
wesentlich niedriger sein. Zum Beispiel werden mit einer

HOECHST AKTIENGESELLSCHAFT
KALLE Niederlassung der Hoechst AG

- 9 -

Mischung aus 2 Gewichtsteilen pulverförmiger Mischung und
10 Gewichtsteilen Klebstoff mit erhöhter Siegelfähigkeit
schon bei Schichtgewichten von 12 g/m$^2$ brauchbare Eigenschaften erzielt.

Eine weitere Möglichkeit zur Beeinflussung der Heißsiegelschichtqualität bietet das Auftragsverfahren.

Dementsprechend betrifft die Erfindung auch ein Verfahren
zur Herstellung des heißsiegelfähigen Papiers, insbesondere eines Lichtpauspapiers, durch Aufbringen und Trocknen einer Lösung oder Dispersion eines in der Hitze
aktivierbaren Klebstoffs auf die Unterlage, welches dadurch gekennzeichnet ist, daß man die Lösung oder Dispersion im Gemisch mit einer feinverteilten, pulverförmigen
Mischung aus einem Copolymerisat des Ethylens mit Vinylacetat, niedermolekularem Polyethylen und Kohlenwasserstoffharz aufträgt und trocknet.

Hierdurch wird erreicht, daß in einem Arbeitsgang der
filmbildende Klebstoff zusammen mit der pulverförmigen
Mischung aufgebracht und getrocknet werden kann, ohne daß
die Komponenten sich ineinander lösen.

Es ist auch möglich, das erfindungsgemäße Verfahren so zu
führen, daß man die Lösung oder Dispersion des Klebstoffs
aufbringt, die pulverförmige Mischung aus einem Copolymerisat des Ethylens mit Vinylacetat, niedermolekularem
Polyethylen und Kohlenwasserstoffharz feinverteilt aufträgt und das Ganze anschließend trocknet.

Hierdurch wird erreicht, daß das Verfahren auch auf solche Substanzen ausgedehnt werden kann, die nicht in die Lösung oder Dispersion des Klebstoffs eingerührt werden können.

Ferner ist die Herstellung eines heißsiegelfähigen Papiers auch in der Weise möglich, daß man die Lösung oder die Dispersion des Klebstoffs aufbringt und trocknet und auf die gebildete Schicht die pulverförmige Mischung feinverteilt aufträgt und das Pulver anschließend durch Erwärmen und/oder Druck fixiert.

Die Trocknungstemperaturen für Lösung oder Dispersion mit und ohne pulverförmiger Mischung liegen im Bereich von etwa 80 bis 150°C.

Das Fixieren der pulverförmigen Teilchen auf der Heißsiegelschicht wird bei Temperaturen im Bereich zwischen etwa 100 und 170°C vorgenommen.

Erfindungsgemäß besteht also die einfachste Auftragsmethode darin, die pulverförmige Mischung in der gewünschten Menge in eine Lösung oder Dispersion des Klebstoffs einzurühren. Man erhält ohne wesentliche Viskositätserhöhung einen erhöhten Feststoffgehalt, der sich hinsichtlich Trocknung und Arbeitsgeschwindigkeit günstig auswirkt. Weil die Partikeln mit einer Korngröße bis zu 200 $\mu$m über das Niveau der Heißsiegelschicht herausragen, ist die Schicht rauh. Die herausragenden Partikeln wirken als Abstandshalter und verhindern infolge

HOECHST AKTIENGESELLSCHAFT
KALLE Niederlassung der Hoechst AG

- 11 -

ihrer Erweichungstemperatur von über 60°C ein vorzeitiges Verkleben der Schichten. Die Gleitfähigkeit der Papiere wird nur wenig verbessert.

Lösung oder Dispersion des Klebstoffs und eingerührter pulverförmiger Mischung können mit einer Luftrakel oder Drahtrakel aufgetragen werden.

Verwendet man dagegen eine Magnetrakel zum Auftrag, so werden die pulverförmigen Teilchen tiefer in die Heißsiegelschicht eingepreßt. Die Schichten erweisen sich dadurch als merklich glatter. Heißsiegelverhalten und Kaltverklebung sind trotz etwas verschieden strukturierter Oberfläche unverändert gut. Die Neigung zu Rückständen nach Abzug des Papiers ist bei der Antragsmethode mittels Magnetrakel besonders gering.

Das Aufstreuen der pulverförmigen Mischung kann mit irgendeiner der bekannten Pudereinrichtungen erfolgen. Bewährt hat sich zum Beispiel die Verwendung eines elektrostatischen Puderzerstäubers. Um sie damit gleichmäßig und reproduzierbar in der gewünschten Menge auf die Bahn aufbringen zu können, muß man die statische Aufladbarkeit beseitigen und ihre Rieselfähigkeit verbessern.

Gewünschte Menge lassen sich mit einer derart vorbehandelten pulverförmigen Mischung gleichmäßig und reproduzierbar über die Bahnbreite aufbringen. Kaltverklebung und Siegelverhalten der Schichten sind den aus Mischungen aufgebrachten gleich. Die Rückstandsneigung kann allerdings erhöht sein. Zur Verbesserung der Haftung der aufgestreuten pulverförmigen Mischung auf der Heißsiegelschichtoberfläche und zur Verhinderung ihrer Rückstandsneigung kann hinter dem Trockner der Beschichtungsmaschine die Papierbahn über eine beheizte Walze geführt werden. Ein Presseur aus Silikongummi drückt gegen die Oberfläche der heißen Bahn und preßt die Pulverteilchen in die Heißsiegelschicht hinein. Die Bahnoberfläche wird dadurch weniger rauh, und die Teilchen der pulverförmigen Mischung haften besser. Die Rückstandsneigung wird verringert. Die übrigen Eigenschaften verändern sich nicht.

Im folgenden wird die Erfindung durch Beispiele erläutert. Die Beispiele 1 bis 3 beschreiben die Herstellung des Pulvers, die darauffolgenden Beispiele die Anwendung des Pulvers in der Heißsiegelschicht.

HOECHST AKTIENGESELLSCHAFT
KALLE Niederlassung der Hoechst AG

- 13 -

Beispiel 1

10      Gewichtsteile (GT) eines Ethylen/Vinylacetat-Co-
                        polymerisates mit ca. 18 Ge-
                        wichtsprozent Vinylacetat,
                        Schmelz-Index ~150 g/10 min;
                        Tropfpunkt (Ring + Kugel) ca.
                        95°C

6       Gewichtsteile (GT) eines niedermolekularen, ver-
                        zweigtkettigen Polyethylen-
                        wachses, Tropfpunkt 118 - 123°C;
                        D 20° 0,93; Viskosität bei 140°C
                        ca. 100 mPa·s

3       Gewichtsteile (GT) eines Kohlenwasserstoffharzes
                        mit mittlerem Molekulargewicht
                        von 300 bis 5.000, Fp. 60 - 70°C

0,06 Gewichtsteile (GT) Thermostabilisator (Irganox[R],
                        Ciba-Geigy)

0,2  Gewichtsteile (GT) Stearinsäureamid

0,2  Gewichtsteile (GT) Stearinsäure

werden gemischt, in einem Extruder aufgeschmolzen und
granuliert. Das Granulat wird unter flüssigem Stickstoff
gekühlt und bei ca. -40 bis -50°C in einer Stiftmühle
kalt gemahlen. Die Siebanalyse zeigt eine Kornverteilung:
< 100 μm: 70 %, < 200 μm: 98 %

HOECHST AKTIENGESELLSCHAFT
KALLE Niederlassung der Hoechst AG

- 14 -

Vergleichsbeispiel A

Es wird nur das Ethylen/Vinylacetat-Copolymerisat kalt gemahlen. Die entsprechende Korngrößenverteilung beträgt: < 100 µm: 42 %, < 200 µm: 91 %

Vergleichsbeispiel B

In der Mischung nach Beispiel 1 wird ein Polyethylenwachs mit paraffinischen Bestandteilen eingesetzt mit folgenden Kenndaten: Fp. 105°C; Viskosität bei 140°C ca. 350 mPa·s.

Diese Mischung wird ebenfalls, wie in Beispiel 1 angegeben, pulverisiert.

Beispiel 2

Das nach Beispiel 1 erhaltene Pulver wird in eine wäßrige Lösung von 5 Gewichtsprozent eines Antistatikums (Cyastat[R] SN, Cyanamid, USA) eingetragen und eine Stunde lang gerührt.

Danach wird das Pulver von der wäßrigen Phase abgetrennt, gewaschen und getrocknet. Dieses Pulver zeigt keine elektrostatische Aufladbarkeit mehr, ein Zeichen dafür, daß Antistatikum von dem Pulver oberflächlich aufgenommen wurde.

Das trockene, antistatische Pulver wird dann mit hochdisperser Kieselsäure (HDK N20S, Elektroschmelzwerk Kempten) in einem Gewichtsverhältnis von 30 Teilen Pulver und 1 Teil Kieselsäure gemischt.

### Beispiel 3

Der in Beispiel 1 angegebenen Mischung wird noch 1 Gewichtsteil Antistatikum zugesetzt, die Mischung in der Schmelze homogenisiert, granuliert und dann kalt gemahlen. Dieses Pulver, das keine elektrostatische Aufladbarkeit besitzt, wird, wie in Beispiel 2 angegeben, mit hochdisperser Kieselsäure gemischt.

Die beiden nach Beispielen 2 und 3 erhaltenen Pulver lassen sich mit einem elektrostatischen Pulverbestäuber gleichmäßig auf eine laufende Papierbahn aufstäuben. Die Auftragsmenge ist linear abhängig von der Umdrehungsgeschwindigkeit der Austragswalze des Bestäubers.

### Beispiel 4

2,5 Teile einer Dispersion eines Copolymerisats aus Vinylacetat, Methacrylsäureester und 5 % Crotonsäure sowie 1 Teil einer Dispersion von Polyvinylacetat werden gemischt und mit Wasser auf ca. 40 Gewichtsprozent Festanteil gebracht. Bezogen auf jeweils 10 Gewichtsteile des Festanteils dieser Dispersion eines filmbildenden Klebstoffs werden schrittweise von 0,25 Gewichtsteilen ansteigend bis 4 Gewichtsteile des nach Beispiel 1 hergestellten Pulvers zugemischt. Das Ganze wird in wäßriger Phase mit einer Luftrakel auf eine Papierbahn, die auf der rückwärtigen Oberfläche mit einer lichtempfindlichen Schicht auf Basis eines Zweikomponenten-Diazomaterials versehen ist, aufgetragen und getrocknet.

Die Trockenschichtgewichte werden auf 16 bis 18 $g/m^2$ eingestellt.

Zur Prüfung werden die Papiere auf verschiedene textile Stoffarten gebügelt und nach dem Erkalten wieder abgezogen.

Es zeigt sich, daß die Haftung der Papiere mit 1 GT Pulver auf 10 GT Dispersion (Festanteil) bereits nahezu ebenso gut siegeln, wie ein Testpapier mit einer Schicht aus dem Dispersionsgemisch ohne Pulver von 24 - 26 $g/m^2$, während die Papiere mit zwei oder mehr GT Pulverzusatz auf 10 GT (fest) gleich gut oder besser haften. Eine Erhöhung des Pulverzusatzes auf 5 oder mehr als 5 GT erbringt keine weitere Verbesserung der Haftkraft.

Zur Prüfung der Kaltverklebung werden mehrere Papierbogen zwischen zwei Glasplatten aufeinandergelegt, mit 15 $g/cm^2$ belastet und bei 50°C für 24 Stunden gehalten. Während die Papiere ohne Pulverzusatz völlig miteinander verklebt sind, zeigen die Papiere mit mehr als 0,5 GT Pulverzusatz keine Verklebung.

Beispiel 5
2 GT des Pulvers nach Beispiel 1 werden auf 10 GT (fest) des Dispersionsgemisches nach Beispiel 4 miteinander vermischt. Die Mischung wird mit einer Luftrakel auf eine Papierbahn aufgetragen und getrocknet, wobei Trockenschichtgewichte zwischen 12 und 20 $g/m^2$ eingestellt werden.

Die Prüfung der Haftkraft auf textilen Stoffmustern ergibt, daß bereits durch 16 $g/m^2$ eine brauchbare Schichthaftung erreicht wird.

HOECHST AKTIENGESELLSCHAFT
KALLE Niederlassung der Hoechst AG

- 17 -

Die Kaltverklebung ist bei allen Schichtgewichten unverändert gering.

Vergleichsbeispiel C

Zu einem Dispersionsgemisch nach Beispiel 4 wird das nach Vergleichsbeispiel A hergestellte Pulver aus Ethylen/ Vinylacetat-Copolymerisat im Verhältnis von 2 GT Pulver auf 10 GT (fest) zugemischt. Die Mischung wird auf die Papierbahn aufgetragen und getrocknet. Das Schichtgewicht ist ca. 18 $g/m^2$. Das Papier wird auf verschiedene textile Stoffmuster aufgebügelt.

Der Test ergibt zwar eine sehr gute Haftkraft und auch einen relativ guten Kaltverklebungswert, jedoch sind, besonders auf den glatten und dunkel gefärbten Stoffarten, nach dem Ablösen des Papiers sehr deutlich weiße und feste Rückstände aus der Heißsiegelschicht zu erkennen.

Vergleichsbeispiel D

2 GT des nach Vergleichsbeispiel B hergestellten Pulvers werden auf 10 GT (fest) in das Dispersionsgemisch nach Beispiel 4 eingerührt. Nach dem Auftragen und Trocknen (Schichtgewicht 18 $g/m^2$) wird das Papier auf verschiedene textile Stoffbahnen aufgebügelt und nach dem Erkalten wieder abgezogen. Dabei zeigt sich, besonders auf glatten und dunkel gefärbten Stoffarten, ein sehr deutlicher, wie Fettflecken aussehender Rückstand.

H O E C H S T   A K T I E N G E S E L L S C H A F T
KALLE  Niederlassung der Hoechst AG

- 18 -

### Beispiel 6

Das Gemisch nach Beispiel 5 wird mit einer Magnetrakel so auf die Papierbahn aufgetragen, daß sich nach dem Trocknen eine Schicht von ca. 18 $g/m^2$ ergibt.

Das Papier wird auf verschiedene textile Stoffmuster aufgebügelt und nach dem Erkalten wieder abgezogen. Die Haftkraft und auch die Kaltverklebung sind gleich denen von Beispiel 5. Auf den Stoffmustern ist nach Ablösen der Papiere in keinem Fall ein Rückstand erkennbar.

### Beispiel 7

Eine Dispersion des filmbildenden Klebstoffs nach Beispiel 4 wird mit einer Luftrakel so auf eine Papierbahn aufgetragen, daß sich nach dem Trocknen ein Schichtgewicht von $\sim$ 16 $g/m^2$ ergibt.

Mit Hilfe eines elektrostatischen Bepuderungsgerätes wird das nach dem Beispiel 2 oder 3 hergestellte rieselfähige Pulver auf die nasse Schicht aufgestreut, in der Weise, daß 2,5 $g/m^2$ auf die Bahnoberfläche kommen und darauf getrocknet.

Das Papier wird in der üblichen Weise auf die verschiedenen textilen Stoffmuster aufgebügelt und nach dem Erkalten wieder abgezogen.

Die Haftwerte und die Kaltverklebung sind gleich den im Beispiel 5 genannten.

HOECHST AKTIENGESELLSCHAFT
KALLE Niederlassung der Hoechst AG

- 19 -

Beispiel 8

Einer Dispersionsmischung aus 5 GT eines Copolymerisates aus Vinylacetat, Methacrylsäureester und 5 % Crotonsäure und 1 GT Polyvinylacetat werden 2 GT des nach Beispiel 1 hergestellten Pulvers auf 10 GT Feststoff der Dispersion zugemischt. Die Mischung wird mit einer Luftrakel auf eine Papierbahn aufgetragen und getrocknet. Das Schichtgewicht - nach der Trocknung - wird schrittweise gesteigert von 10 $g/m^2$ auf 18 $g/m^2$.

Bereits von 14 $g/m^2$ an wird eine Haftung des Papiers auf den textilen Stoffen erreicht, die besser ist, als bei einem handelsüblichen heißsiegelfähigen Papier mit einer Beschichtung von 22 - 24 $g/m^2$. gering. Die Prüfung zeigt bis 50°C nur geringe Kaltverklebung, während ein Muster ohne Pulverzusatz völlig verklebt ist.

-----

HOECHST AKTIENGESELLSCHAFT
KALLE Niederlassung der Hoechst AG

Hoe 81/K 050          - 20 -                22. August 1982
                                            WLK-Dr.S-ur

## Patentansprüche

1. Heißsiegelfähiges Papier, insbesondere Lichtpauspapier, mit einer Heißsiegelschicht aus einem in der
Hitze aktivierbaren Klebstoff, dadurch gekennzeichnet,
daß die Heißsiegelschicht zusätzlich in dem Klebstoff
eine feinverteilte, pulverförmige Mischung enthält, die
aus einem Copolymerisat des Ethylens mit Vinylacetat,
niedermolekularem Polyethylen und Kohlenwasserstoffharz
besteht.

2. Papier nach Anspruch 1, dadurch gekennzeichnet, daß
die Mischung ein Pulver mit Teilchengrößen zwischen etwa
20 und 200 µm darstellt.

3. Papier nach Ansprüchen 1 und 2, dadurch gekennzeichnet, daß die Mischung zu etwa 5 bis 30 Gewichtsprozent,
bezogen auf das Gesamttrockenschichtgewicht der Heißsiegelschicht, vorhanden ist.

4. Papier nach Ansprüchen 1 bis 3, dadurch gekennzeichnet, daß die Mischung aus 40 bis 60 Gewichtsteilen Copolymerisat des Ethylens mit Vinylacetat, 20 bis 40
Gewichtsteilen Polyethylen und 10 bis 20 Gewichtsteilen
Kohlenwasserstoffharz besteht.

5. Papier nach Ansprüchen 1 bis 4, dadurch gekennzeichnet, daß das Copolymerisat des Ethylens mit Vinylacetat
aus etwa 75 bis 85 Gewichtsteilen Ethylen und etwa 15 bis
25 Gewichtsteilen Vinylacetat besteht mit einem Schmelz-
Index von über 50 g/10 min.

6. Papier nach Ansprüchen 1 bis 4, dadurch gekennzeichnet, daß das Polyethylen ein Molekulargewicht im Bereich zwischen etwa 2.000 und 10.000 und einen Tropfpunkt im Bereich von etwa 110 bis 130°C besitzt.

7. Papier nach Ansprüchen 1 bis 4, dadurch gekennzeichnet, daß das Kohlenwasserstoffharz ein Polymerisat aus 40 bis 80 Gewichtsteilen Dicyclopentadien und 20 bis 60 Gewichtsteilen eines aromatischen Kohlenwasserstoffs ist.

8. Papier nach Ansprüchen 1 bis 7, dadurch gekennzeichnet, daß die Heißsiegelschicht ein Schichtgewicht von etwa 10 bis 25 g/m$^2$ besitzt.

9. Verfahren zur Herstellung von heißsiegelfähigem Papier, insbesondere Lichtpauspapier, durch Aufbringen und Trocknen einer Lösung oder Dispersion eines in der Hitze aktivierbaren Klebstoffs auf die Unterlage, dadurch gekennzeichnet, daß man die Lösung oder Dispersion im Gemisch mit einer feinverteilten, pulverförmigen Mischung aus einem Copolymerisat des Ethylens mit Vinylacetat, niedermolekularem Polyethylen und Kohlenwasserstoffharz aufträgt und trocknet.

10. Verfahren zur Herstellung von heißsiegelfähigem Papier, insbesondere Lichtpauspapier, durch Aufbringen und Trocknen einer Lösung oder Dispersion eines in der Hitze aktivierbaren Klebstoffs auf die Unterlage, dadurch gekennzeichnet, daß man die Lösung oder Dispersion des Klebstoffs aufbringt, die pulverförmige Mischung aus

HOECHST AKTIENGESELLSCHAFT
KALLE Niederlassung der Hoechst AG

- 22 -

einem Copolymerisat des Ethylens mit Vinylacetat, niedermolekularem Polyethylen und Kohlenwasserstoffharz feinverteilt aufträgt und das Ganze anschließend trocknet.

-----

**0074528**
Nummer der Anmeldung

**Europäisches Patentamt**

**EUROPÄISCHER RECHERCHENBERICHT**

EP  82 10 7749

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 09 J    7/04 |
| A | FR-A-2 111 587   (P.H. GLATFELTER) | | C 09 J    3/14 |
| | --- | | |
| A | CHEMICAL ABSTRACTS, Band 84, Nr. 8, Februar 1976, Seite 67, Nr. 45572p, Columbus, Ohio, USA & JP - A - 75 126 041 (NIPPON PULP INDUSTRY CO., LTD.) 03.10.1975 * Zusammenfassung * | | |
| | --- | | |
| A | US-A-4 049 483   (HARRY A. LODER) | | |
| | --- | | |
| A | GB-A-1 205 460   (DU PONT) | | |
| | ----- | | |

**RECHERCHIERTE SACHGEBIETE (Int. Cl. ³)**

C 09 J
D 21 H

Der vorliegende Recherchenbericht wurde für alle Patentansprüche erstellt.

| Recherchenort DEN HAAG | Abschlußdatum der Recherche 09-12-1982 | Prüfer GIRARD Y.A. |
|---|---|---|